# EUROPEAN PATENT SPECIFICATION

(11) **EP 2 151 331 B1**
(45) Date of publication and mention of the grant of the patent: **21.03.2012**
(21) Application number: 08765132.9
(22) Date of filing: 29.05.2008
(51) Int. Cl.: C08L 29/04, B60C 1/00, C08L 77/02, B32B 25/08, B32B 27/30, B32B 27/34, B60C 5/14, C08K 5/435, C08L 21/00

(54) **LOW-PERMEABILITY LAMINATE, AND PNEUMATIC TIRE UTILIZING THE SAME**
LAMINAT MIT GERINGER DURCHLÄSSIGKEIT UND LUFTREIFEN DAMIT
STRATIFIE A FAIBLE PERMEABILITE ET PNEU L'UTILISANT

(30) Priority: 30.05.2007 JP 2007143774
(43) Date of publication of application: 10.02.2010
(73) Proprietor: The Yokohama Rubber Co., Ltd., Minato-ku Tokyo 105-8685 (JP)
(72) Inventor: MOROOKA, Naoyuki, Hiratsuka-shi Kanagawa 254-8601 (JP)
(74) Representative: Vossius & Partner
(86) International application number: PCT/JP2008/060319
(87) International publication number: WO 2008/149909

(56) References cited:
- EP-A1- 1 145 870
- WO-A1-2004/012939
- WO-A1-2007/043489
- WO-A1-2007/043497
- DE-A1- 10 162 968
- JP-A- 59 020 345
- JP-A- 2002 080 644

## Description

### Technical Field

The present invention relates to a low permeability laminate and a pneumatic tire using the same, more specifically relates to a low permeability laminate using an ethylene vinyl alcohol copolymer (EVOH) and a production method thereof.

### Background Art

An ethylene vinyl alcohol copolymer (EVOH) and a polyamide have good compatibility with each other and it is possible to establish both an EVOH gas barrier property and heat resistance, toughness and impact resistance (see Patent Literature 1). However, the reaction between EVOH and a polyamide further proceeds during mixing (or kneading) and forming resulting in the problems of grains forming at the molded article or gel formed from the reaction sticking onto the molding die and making long-time long run moldability or shapeability difficult. Further, due to the reaction of EVOH and the polyamide, there was the problem that the EVOH crystallinity (degree of crystallization) fell and the EVOH gas barrier property greatly dropped.

For improving the long run moldability, Patent Literature 2 describes blending an organic acid, Patent Literature 3 describes blending two types of alkaline earth metal salts and Patent Literature 4 describes formulation using a polyamide-based resin composition, in which the terminal ends are modified with diamine compounds and carboxylic acids. Further, Patent Literature 5 proposes a formulation for blending a boric acid compound or acetate or other metal compound and Patent Literature 6 proposes a resin composition comprising two layers of EVOH and polyamide-based resin for the intermediate layers.

However, the inventors studied the above disclosed arts in detail. As a result, they are not sufficient in both the points of heat resistance and long run moldability. Further improved resin compositions are desirable.
Patent Literature 1: Japanese Patent Publication (A) No. 58-129035 (EP0086058)
Patent Literature 2: Japanese Patent Publication (A) No. 4-304253
Patent Literature 3: Japanese Patent Publication (A) No. 7-97491
Patent Literature 4: Japanese Patent Publication (A) No. 8-259756
Patent Literature 5: Japanese Patent Publication (A) No. 4-13237
Patent Literature 6: Japanese Patent Publication (A) No. 6-23924

### DISCLOSURE OF THE INVENTION

Accordingly, objects of the present invention are to overcome the above-mentioned problems of the prior art and to effectively suppress the reaction between EVOH and a polyamide and make long run moldability possible and to provide a laminate which has heat resistance and a superior gas barrier property.

In accordance with the present invention, there is provided a low permeability laminate comprising a laminate obtained by laminating (A) a thermoplastic resin composition layer containing (i) 50 to 90% by weight of an ethylene vinyl alcohol copolymer having an ethylene content of 20 to 50 mol% and a saponification degree of 90% or more, (ii) 50 to 10% by weight of an aliphatic polyamide resin having 90 mol% or more of ε-caprolactam-derived ingredients and (iii) 3 to 50 parts by weight of a sulfonamide plasticizer with respect to 100 parts by weight of the total amount of the components (i) and (ii) and (B) at least one rubber composition layer, wherein a ratio of a thickness ε_{B} of layer (B)/a thickness ε_{A} of layer (A) (ε_{B}/ε_{A}) is 10 or more, heat treated within a range of 130°C to 210°C and a pneumatic tire using the same.

According to the present invention, the thermoplastic resin composition comprising a blend of an ethylene vinyl alcohol copolymer (EVOH) and a polyamide (PA) into which 5 to 50 parts by weight of a sulfonamide-based plasticizer, based on 100 parts by weight of the total amount of the blend, is mixed can effectively suppress the reaction of EVOH/PA. Due to this, long run moldability and processability can be obtained. Further, a laminate comprising this thermoplastic resin composition laminated with a rubber composition can be heat treated at a temperature of 130 to 210°C to make the sulfonamide-based plasticizer migrate to the rubber composition layer. As a result, it is possible to obtain a laminate having gas barrier property superior to that of EVOH/PA containing no plasticizer. Such a laminate can be effectively used as an inner liner of a tire.

### Best Mode for Carrying Out the Invention

The inventors engaged in research to solve the above-mentioned problem and, as a result, found that a thermoplastic resin composition comprising a blend of EVOH and PA into which a specific amount of a sulfonamide-based plasticizer is blended can effectively suppress the reaction of EVOH/PA, whereby long term moldability and processability can be obtained and, further, a laminate comprising this thermoplastic resin composition laminated with a rubber composition can be heat treated at a temperature of 130 to 210°, and, therefore, the sulfonamide-based plasticizer can be migrated to the rubber composition layer and, as a result, a gas barrier property superior to that of EVOH/PA containing no sulfonamide-based plasticizer can be obtained and that this laminate can be used effectively for a tire inner liner and the like.

According to the present invention, there is provided a low permeability laminate comprised of a laminate obtained by laminating (A) a thermoplastic resin composition layer containing (i) 50 to 90% by weight, preferably 60 to 80% by weight, of an ethylene vinyl alcohol copolymer (EVOH) having an ethylene content of 20 to 50 mol%, preferably 20 to 40 mol% and a saponification degree of 90% or more, preferably 99% or more, (ii) 50 to 10% by weight, preferably 40 to 20% by weight, of an aliphatic polyamide resin having 90 mol% or more, preferably 95 to 100 mol%, of ε-caprolactam-derived ingredients and (iii) 3 to 50 parts by weight, preferably 5 to 20 parts by weight, of a sulfonamide-based plasticizer, based upon 100 parts by weight of the total amount of the components (i) and (ii) and (B) at least one rubber composition layer, wherein a ratio of a thickness ε_{B} of layer (B)/a thickness ε_{A} of layer (A) (ε_{B}/ε_{A}) is 10 or more, preferably 15 or more, heat treated within a temperature range of 130°C to 210°C, preferably 150°C to 200°C.

As the aliphatic polyamide resin (A) (ii), it is possible to use nylon 6 and/or nylon 6,66; nylon 6,12; nylon 6,66,12; nylon 610, etc. containing 90 mol% or more of an ε-caprolactam-derived component alone or in any blends thereof. As the aliphatic polyamide resin A (ii), it is also possible to use a modified aliphatic polyamide resin capable of being prepared by the method below alone or in any blend thereof with the above-mentioned aliphatic polyamide resin.

A modified aliphatic polyamide resin is produced by uniformly dispersing 0.5 to 15% by weight, preferably 1.0 to 5.0% by weight, of a specific clay mineral into an aliphatic polyamide so as to make a composite material. The.method for dispersing the clay mineral into a polyamide is not particularly limited, but a method for bringing the clay mineral into contact with a swelling agent to expand the interlayer distance of the clay mineral, where the monomer is introduced and polymerized, or a method for melt mixing the clay mineral with the polyamide may be mentioned. The clay mineral for modifying the aliphatic polyamide is a clay mineral having the interlayer (or having dimentions in the nanometre area) clay mineral. The clay mineral having the interlayer is not particularly limited, however, specifically, smectites such as montmorillonite, beidellite, saponite, hectorite; kaolinites such as kaolinite, halloysite; vermiculites such as dioctahedral vermiculite, trioctahedral vermiculite; micas such as tainiolite, tetrasilicic mica, muscovite, illite, sericite, phlogopite and biotite may be mentioned.

The above-mentioned sulfonamide-based plasticizer (A) (iii) is not particularly limited, but as preferable examples, N-alkyl benzenesulfonamide, N-alkyl-p-toluenesulfonamide, and/or p-toluenesulfonamide and the like may be used. If the compounding amount of sulfonamide-based plasticizer in the blend is low, the reaction of EVOH and the polyamide will proceed and, long run molding will not be possible, the EVOH crystallinity will also drop and the gas barrier property will worsen, and, therefore, this is not preferable. If too much, the sulfonamide-based plasticizer will bleed to the surface, and, therefore, this is not preferable.

As the rubber component forming the rubber composition layer (B), for example, butyl rubber, halogenated butyl rubber, halogenated p-alkyl styrene butylene copolymer rubber, ethylene propylene rubber, ethylene propylene diene rubber, styrene-butadiene copolymer rubber, acrylonitrile butadiene-rubber, natural rubber, polyisoprene rubber and polybutadiene rubber may be mentioned. These may be used alone or in any blends thereof.

To the rubber composition forming the above-mentioned rubber composition layer (B), in addition to the above-mentioned rubber component, fillers such as carbon black, silica and the like, vulcanization or cross-linking agents, vulcanization or cross-linking accelerators, various types of oils, antioxidants, plasticizers, or other various types of additives generally compounded in tires or other rubber compositions. These additives may be mixed in by a general method to obtain a composition for vulcanization or cross-linking. The compounding amounts of these additives may be made the conventional general compounding amounts so long as the objects of the present invention are not adversely affected.

### EXAMPLES

Examples will now be used to further illustrate the present invention, but the present invention is by no means limited to these Examples.

The materials A(i), A(ii) and A(iii) used in the Examples below are shown in Table I, and the formulations forming the rubber composition (B) are shown in Table II.

**Table I**

| | | |
|---|---|---|
| Ethylene vinyl alcohol copolymer A (i) | Ethylene: 25 mol% Ethylene vinyl alcohol copolymer | Soarnol V2504RB made by Nippon Synthetic Chemical Industry |
| | Ethylene: 38 mol% Ethylene vinyl alcohol copolymer | Eval H171B made by Kuraray |
| Aliphatic polyamide A (ii) | Nylon 6 | UBE Nylon 1030B made by Ube Industries |
| | Nylon 6,66 (Copolymerization ratio 90/10) | UBE Nylon 5033B made by Ube Industries |
| | Nylon 6,12 (Copolymerization ration 90/10) | Grilon CR-9 made by EMS |
| | 2 wt% montmorillonite modified Nylon6 | UBE Nylon 1022C2 made by Ube Industries |
| Sulfonamide-based plasticizer A (iii) | N-butylbenzenesulfonamide | BM-4 made by Daihachi Chemical Industry |
| | p-toluenesulfonamide | Topcizer No. 1 S made by Fujiamide Chemical |
| | N-ethyl-p-toluenesulfonamide | Topcizer No. 5 made by Fujiamide Chemical |

**Table II: Formulation of Rubber Composition (B)**

| Parts by weight | G1 | G2 | G3 |
|---|---|---|---|
| Natural rubber | 20 | - | - |
| Emulsion polymerized SBR | 40 | 30 | 40 |
| Halogenated butyl rubber | 40 | 50 | 40 |
| EPDM | - | 20 | - |
| Butadiene rubber | - | - | 20 |
| Carbon black | 60 | 60 | 60 |
| Aromatic oil | 15 | 15 | 15 |
| Brominated phenol resin | 5 | 5 | 5 |
| Zinc oxide | 2 | 2 | 2 |
| Stearic acid | 1 | 1 | 1 |

| | | | |
|---|---|---|---|
| Table II footnotes Natural rubber: SIR20 made by PT.NUSIRA Emulsion polymerized SBR: NIPOL 1502 made by Zeon Corporation K.K. Halogenated butyl rubber: Exxon BromoButyl 2255 made by ExxonMobil Chemicals EPDM: Esprene 505A made by Sumitomo Chemical K.K. Butadiene rubber: NIPOL BR1220 made by Zeon Corporation K.K. Carbon black: Seast 9M made by Tokai Carbon K.K. Aromatic oil: Desolex No. 3 made by Showa Shell Sekiyu K.K. Brominated phenol resin: Tackrol 250-1 made by Taoka Chemical K.K. Zinc oxide: Zinc oxide #3 made by Seido Chemical K.K. Stearic acid: Beads Stearic Acid YR made by NOF K.K. | | | |

### Preparation of Sample of Rubber Composition Layer (B)

In each of the formulations shown in Table II, the ingredients other than the vulcanization accelerator and the sulfur were charged into a 16 liter internal mixer and mixed for 5 minutes. When reaching 140°C, the resultant mixture was discharged to obtain a master batch. The sulfur and vulcanization accelerator were mixed into this master batch and the resultant mixture was mixed by an open roll to obtain a rubber composition.

### Test Methods for Evaluating Laminate Physical Properties

### Method of Preparing Thermoplastic Resin Composition for η Evaluation

In the thermoplastic resin compositions shown in Table III, those that contain a sulfonamide-based plasticizer were prepared by charging an aliphatic polyamide resin and sulfonamide-based plasticizer into a twin screw kneader/extruder (TEX44 made by the Japan Steel Works Ltd.), in advance, and melt mixing them at a cylinder temperature of 240°C. Then, EVOH pellets and aliphatic polyamide resin mixed with the plasticizer were dry blended and melt mixed using a single screw extruder at 250°C to thereby prepare a thermoplastic resin composition for η evaluation.

### Evaluation of η

Using a Capilograph (made by Toyo Seiki Ltd.) under conditions of a temperature of 250°C and a shear rate of 122 sec⁻¹, the viscosity η_{60 min} after 60 minutes at rest, the viscosity η_{30 min} after 30 minutes at rest and the viscosity η_{5 min} after 5 minutes at rest were measured to find the melt viscosity ratios η_{30 min}/η_{5 min} and η_{60 min}/η_{5 min}. The results are shown in Table III.

### Long Run Moldability (Time)

Resin pellets were charged into a T-die single screw extruder to continuously form a film of the resin under conditions of an extruder temperature of 240°C and die temperature of 250°C. The time it took for grains to form in the film was measured. The time it took was made the long run molding time. Samples having a long run molding time of 3 hours or more were marked "Good", and those with less than 3 hours as "Poor". Note that testing on cases where continuous forming was able to be continued for 12 or more hours was discontinued. The results are shown in Table III.

### Air Permeability After Hot Pressing

An 8 µm thick film of the thermoplastic resin composition (A) was laminated on the rubber composition (B), heat treated and measured for air permeability. The air permeability was measured, according to JIS K7126 under conditions of a test gas of air (O₂:N₂ = 20:80) and a test temperature of 30°C. The results are shown in Table III.

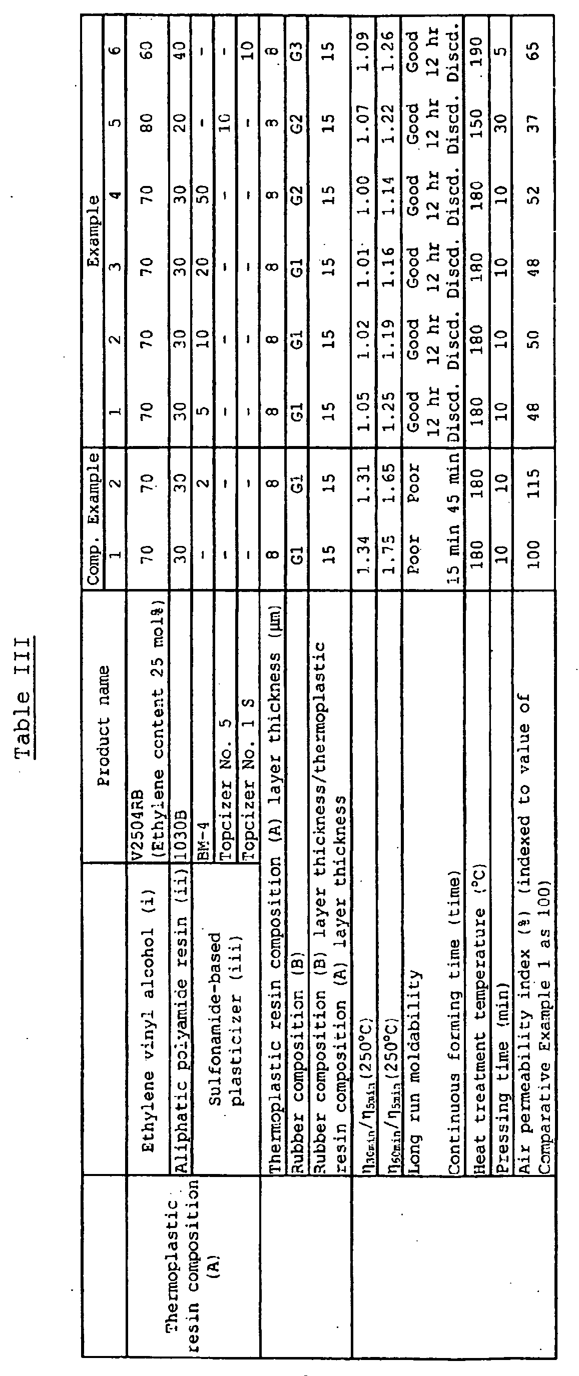

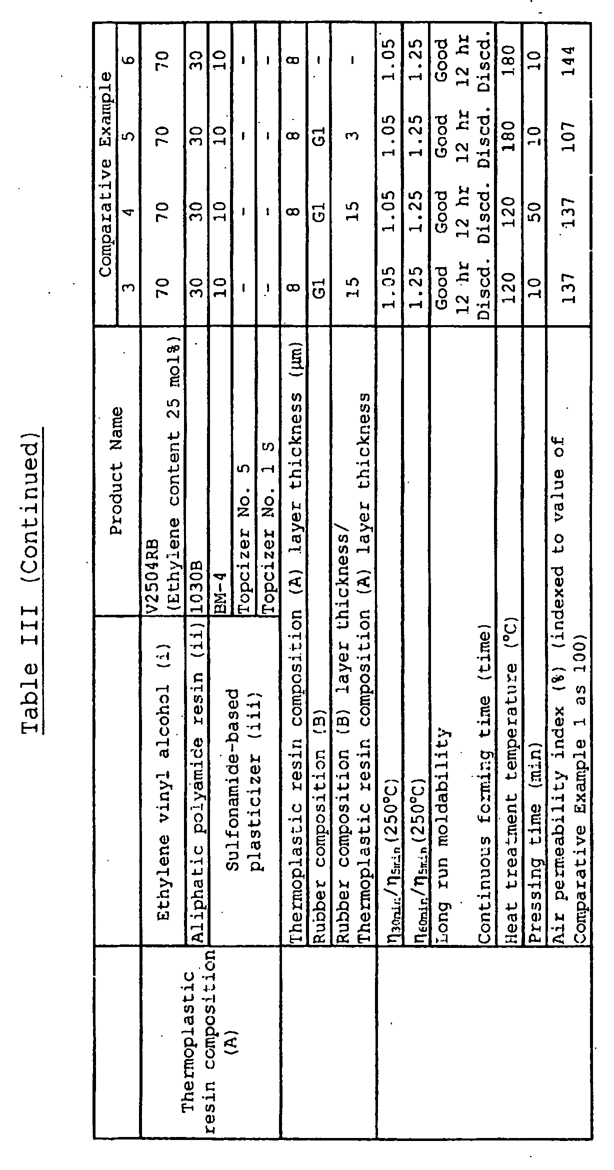

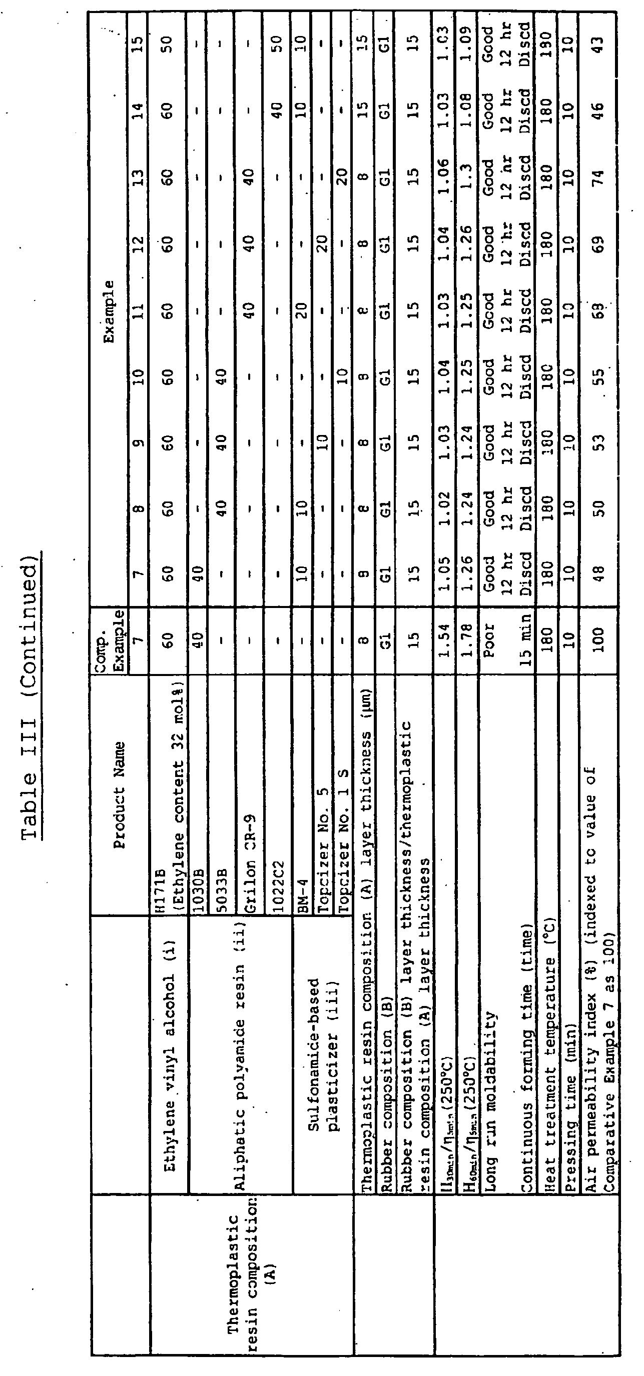

### Comparative Example 1

EVOH pellets and Nylon 6 pellets were dry blended to 70/30(w/w) and charged into a T-die single screw extruder, where they were continuously formed into a film under an extruder temperature of 240°C and a die temperature of 250°C. The long run moldability was 15 minutes.

### Comparative Example 2

EVOH pellets and aliphatic polyamide resin pellets in which a sulfonamide-based plasticizer was blended in advance were dry blended and charged into a T-die single screw extruder, where they were continuously formed into a film under an extruder temperature of 240°C and a die temperature of 250°C. The long run moldability was 45 minutes.

### Examples 1 to 6

EVOH pellets and aliphatic polyamide resin pellets in which a sulfonamide-based plasticizer was blended in advance were dry blended and charged into a T-die single screw extruder, where they were continuously formed into a film under an extruder temperature of 240°C and a die temperature of 250°C. These compositions were capable of continuous forming for 12 or more hours. Further, the compositions laminated with the rubber composition (B) and heat treated had lower air permeabilities in comparison to Comparative Example 1 not containing BM-4.

### Comparative Examples 3 to 4

EVOH pellets and aliphatic polyamide resin pellets in a sulfonamide-based plasticizer was blended in advance were dry blended and charged into a T-die single screw extruder, where they were continuously formed into a film under an extruder temperature of 240°C and a die temperature of 250°C. The temperature of the heat treatment on the composition laminated with the rubber composition (B) was low, and, therefore, the air permeability after heat treatment was higher in comparison to Comparative Example 1.

### Comparative Example 5

EVOH pellets and aliphatic polyamide resin pellets, in which a sulfonamide-based plasticizer was blended in advance, were dry blended and charged into a T-die single screw extruder where they were continuously formed into a film under an extruder temperature of 240°C and a die temperature of 250°C. The ratio of the rubber composition (B) layer thickness/thermoplastic resin composition (A) layer thickness when laminating the composition with the rubber composition (B) and heat treating it was less than 10, and, therefore, the air permeability was higher in comparison to Comparative Example 1.

### Comparative Example 6

EVOH pellets and aliphatic polyamide resin pellets, in which a sulfonamide-based plasticizer was blended in advance, were dry blended and charged into a T-die single screw extruder where they were continuously formed into a film under an extruder temperature of 240°C and a die temperature of 250°C. The result and film was not laminated to the rubber composition (B), but was laminated to a 1 mm thick iron sheet and heat treated. The air permeability after heat treatment was higher in comparison to Comparative Example 1.

### Comparative Example 7

EVOH pellets and aliphatic polyamide resin pellets were dry blended and charged into a T-die single screw extruder where they were continuously formed into a film under an extruder temperature of 240°C and a die temperature of 250°C. The long run moldability was 15 minutes.

### Examples 7 to 13

EVOH pellets and aliphatic polyamide resin pellets, in which a sulfonamide-based plasticizer was blended in advance, were dry blended and charged into a T-die single screw extruder where they were continuously formed into a film under an extruder temperature of 240°C and a die temperature of 250°C. These compositions were capable of continuous forming for 12 hours. Further, the compositions were laminated with the rubber composition (B) and heat treated, whereby they had lower air permeabilities in comparison to Comparative Example 7 which did not contain the sulfonamide-based plasticizer.

### Examples 14 to 15

EVOH pellets and 2% by weight montmorillonite-modified polyamide resin pellets, in which a sulfonamide-based plasticizer were blended in advance, were dry blended and charged into a T-die single screw extruder where they were continuously formed into a film under an extruder temperature of 240°C and a die temperature of 250°C. These compositions were capable of continuous forming for 12 hours. Further, in comparison to Examples 7 to 13, the η_{30 min}/η_{5 min} ratios were almost equal, however, the η_{30 min}/η_{5 min} ratios were close in comparison with Examples 7 to 13, demonstrating superior long run moldability.

### Industrial Applicability

According to the present invention, by further mixing a specific amount of sulfonamide-based plasticizer into an EVOH and aliphatic acid polyamide blend, EVOH/aliphatic acid polyamide reactions can be effectively suppressed and long run moldability becomes possible. Further, by subjecting a laminate of this resin and a rubber composition to heat treatment from 130 to 210°C, the sulfonamide-based plasticizer can be migrated to the rubber composition layer, whereby, as a result, a gas barrier property superior to that of an EVOH/aliphatic acid polyamide not mixed with a plasticizer can be obtained, and the laminate can be used effectively as, for example, the inner liner of a tire.

## Claims

1. A low permeability laminate comprising a laminate of (A) a thermoplastic resin composition layer containing (i) 50 to 90% by weight of an ethylene vinyl alcohol copolymer having an ethylene content of 20 to 50 mol% and a saponification degree of 90% or more, (ii) 50 to 10% by weight of an aliphatic polyamide resin having 90 mol% or more of an ε-caprolactam-derived component and (iii) 3 to 50 parts by weight of a sulfonamide-based plasticizer, based upon 100 parts by weight of the total amount of the components (i) and (ii), laminated with (B) at least one rubber composition layer, wherein a ratio of a thickness ε_{B} of layer (B)/a thickness ε_{A} of a layer (A) (ε_{B}/ε_{A}) is 10 or more, the laminate being heat treated within a range of 130°C to 210°C.

2. A laminate as claimed in claim 1, wherein the plasticizer (A)(iii) is at least one plasticizer selected from N-alkylbenzene-sulfonamide, N-alkyl-p-toluenesulfonamide and p-toluenesulfonamide.

3. A laminate as claimed in claim 1 or 2, wherein the aliphatic polyamide resin (A)(ii) is (a) nylon 6 and/or (b) a blend thereof with at least one of nylon 6,66, nylon 6,12 and nylon 6,66,12 containing 90 mol% or more of an ε-caprolactam-derived component.

4. A laminate as claimed in claim 1 or 2, wherein the aliphatic polyamide resin (A)(ii) is a modified aliphatic polyamide resin modified with 0.5 to 15% by weight of clay mineral with respect to the aliphatic polyamide.

5. A laminate as claim in any one of claims 1 to 4, wherein the rubber component of the rubber composition layer (B) is at least one of butyl rubber, halogenated butyl rubber, halogenated p-alkylstyrene butylene copolymer rubber, ethylene propylene rubber, ethylene propylenediene rubber, styrene-butadiene rubber, acrylonitrile butadiene rubber, natural rubber, isoprene rubber and butadiene rubber.

6. A pneumatic tire using the laminate according to any one of claims 1 to 5.

7. A pneumatic tire using the laminate according to any one of claims 1 to 5, as an inner liner thereof.

## Patentansprüche

1. Ein Laminat mit geringer Permeabilität, umfassend ein Laminat aus (A) einer thermoplastischen Harzzusammensetzungsschicht, enthaltend (i) 50 bis 90 Gew.-% eines Ethylenvinylalkohol-Copolymers mit einem Ethylengehalt von 20 bis 50 Mol% und einem Verseifungsgrad von 90% oder mehr, (ii) 50 bis 10 Gew.-% eines aliphatischen Polyamidharzes mit 90 Mol% oder mehr einer von ε-Caprolactam abgeleiteten Komponente und (iii) 3 bis 50 Gewichtsteile eines Weichmachers auf Sulfonamidbasis, bezogen auf 100 Gewichtsteile der Gesamtmenge der Komponenten (i) und (ii), laminiert mit (B) mindestens einer Kautschukzusammensetzungsschicht, wobei ein Verhältnis einer Dicke ε_{B} der Schicht (B)/einer Dicke ε_{A} einer Schicht (A) (ε_{B}/ε_{A}) 10 oder mehr beträgt, wobei das Laminat in einem Bereich von 130°C bis 210°C wärmebehandelt wird.

2. Ein Laminat wie in Anspruch 1 beansprucht, wobei der Weichmacher (A) (iii) mindestens ein Weichmacher ist, ausgewählt aus N-Alkylbenzolsulfonamid, N-Alkyl-p-toluolsulfonamid und p-Toluolsulfonamid.

3. Ein Laminat wie in Anspruch 1 oder 2 beansprucht, wobei das aliphatische Polyamidharz (A) (ii) gleich (a) Nylon 6 und/oder (b) einem Gemisch davon mit mindestens einem aus Nylon 6,66, Nylon 6,12 und Nylon 6,66,12 ist, enthaltend 90 Mol% oder mehr einer von ε-Caprolactam abgeleiteten Komponente.

4. Ein Laminat wie in Anspruch 1 oder 2 beansprucht, wobei das aliphatische Polyamidharz (A) (ii) ein modifiziertes aliphatisches Polyamidharz ist, modifiziert mit 0,5 bis 15 Gew.-% eines Tonminerals, bezogen auf das aliphatische Polyamid.

5. Ein Laminat wie in einem der Ansprüche 1 bis 4 beansprucht, wobei die Kautschukkomponente der Kautschukzusammensetzungsschicht (B) mindestens eines aus Butylkautschuk, halogeniertem Butylkautschuk, halogeniertem p-Alkylstyrolbutylen-Copolymerkautschuk, Ethylenpropylenkautschuk, Ethylenpropylendienkautschuk, Styrolbutadienkautschuk, Acrylnitrilbutadienkautschuk, Naturkautschuk, Isoprenkautschuk und Butadienkautschuk ist.

6. Ein Luftreifen, bei dem das Laminat gemäß einem der Ansprüche 1 bis 5 verwendet wird.

7. Ein Luftreifen, bei dem das Laminat gemäß einem der Ansprüche 1 bis 5 als ein Innerliner davon verwendet wird.

## Revendications

1. Laminé à faible perméabilité comprenant un laminé de (A) une couche de composition de résine thermoplastique contenant (i) 50 à 90% en poids d'un copolymère d'éthylène vinyl alcool ayant une teneur en éthylène de 20 à 50% en mole et un degré de saponification de 90% ou plus, (ii) 50 à 10% en poids d'une résine de polyamide aliphatique ayant 90% en mole ou plus d'un composant dérivé de ε-caprolactame et (iii) 3 à 50 parties en poids d'un plastifiant à base de sulfonamide, basé sur 100 parties en poids de la quantité totale des composants (i) et (ii), laminé avec (B) au moins une couche de composition de caoutchouc, où un rapport d'une épaisseur ε_{B} de la couche (B)/une épaisseur ε_{A} d'une couche (A) (ε_{B}/ε_{A}) est de 10 ou plus, le laminé étant thermotraité dans une plage de 130°C à 210°C.

2. Laminé selon la revendication 1, où le plastifiant (A) (iii) est au moins un plastifiant sélectionné parmi N-alkylbenzène-sulfonamide, N-alkyl-p-toluènesulfonamide et p-toluènesulfonamide.

3. Laminé selon la revendication 1 ou 2, où la résine de polyamide aliphatique (A) (ii) est (a) du nylon 6 et/ou (b) un mélange de celui-ci avec au moins un parmi le nylon 6,66, le nylon 6,12 et le nylon 6,66,12 contenant 90% en mole ou plus d'un composé dérivé de ε-caprolactame.

4. Laminé selon la revendication 1 ou 2, où la résine de polyamide aliphatique (A) (ii) est une résine de polyamide aliphatique modifiée, modifiée avec 0,5 à 15% en poids d'un minéral d'argile par rapport au polyamide aliphatique.

5. Laminé selon l'une quelconque des revendications 1 à 4, où le composant de caoutchouc de la couche de composition de caoutchouc (B) est au moins un parmi le caoutchouc butyle, le caoutchouc butyle halogéné, le caoutchouc de copolymère p-alkylstyrène butylène halogéné, le caoutchouc d'éthylène propylène, le caoutchouc d'éthylène propylènediène, le caoutchouc styrène-butadiène, le caoutchouc acrylonitrile butadiène, le caoutchouc naturel, le caoutchouc isoprène et le caoutchouc butadiène.

6. Bandage pneumatique utilisant le laminé selon l'une quelconque des revendications 1 à 5.

7. Bandage pneumatique utilisant le laminé selon l'une quelconque des revendications 1 à 5, comme un revêtement intérieur de celui-ci.
